# EUROPEAN PATENT SPECIFICATION

(11) **EP 2 941 567 B1**
(45) Date of publication and mention of the grant of the patent: **01.03.2017**
(21) Application number: 13810936.8
(22) Date of filing: 17.12.2013
(51) Int. Cl.: F04B 53/14, F04B 37/10, F04B 53/02

(54) **PISTON AND USE OF SUCH PISTON**
KOLBEN UND VERWENDUNG SOLCH EINES KOLBENS
PISTON ET UTILISATION D'UN TEL PISTON

(30) Priority: 21.12.2012 SE 1251497; 21.12.2012 SE 1251498
(43) Date of publication of application: 11.11.2015
(73) Proprietor: Tetra Laval Holdings & Finance S.A., 1009 Pully (CH)
(72) Inventor: JOHANSSON, Fredrik, S-227 60 Lund (SE); SALMAN, Isac, S-217 44 Malmö (SE)
(74) Representative: Tetra Pak - Patent Attorneys SE
(86) International application number: PCT/EP2013/076946
(87) International publication number: WO 2014/095897

(56) References cited:
- EP-A1- 1 881 199
- DE-A1-102008 002 515
- DE-A1-102008 010 238
- DE-U1-202006 006 221
- US-A1- 2004 258 547

## Description

### TECHNICAL FIELD

The present invention relates to pistons, in particular to a piston well adapted for use in a piston pump. According another aspect the present invention relates to a piston pump seal for use in piston pumps

### BACKGROUND ART

A typical example where piston pumps are used, within the field of food processing, is in homogenizers. Homogenization relates to the stabilization of fat emulsion such that it is not affected by gravity separation. By homogenizing e.g. milk, cream, and other dairy products they may not separate to any significant degree during their shelf life. Homogenization may also affect flavour and other properties of the product subjected to it. A rudimentary explanation of the main purpose of homogenization is that fat globules are disrupted into smaller ones, which are not as prone to separate by gravity.

The disruption of fat globules is made by application of force, and a common approach is to force a product under high pressure (homogenization pressure) through a small slit. When passing the slit the product will rapidly increase its velocity. The flow will become turbulent, generating turbulent eddies, and the elevated velocity will generate a pressure drop so substantial that the product may start to boil. The first effect contributing to homogenization is that the violent eddies will tear the fat globules apart, and the second effect is that cavitation of the imploding bubbles generated when boiling will disrupt the fat globules.

The skilled person is well aware of the above, yet for the non-skilled person studying the present invention it is important to realize that homogenization is a process requiring large amount of energy. Due to a quite low efficiency a large amount of the energy applied is converted to heat, which may or may not be a problem depending on the nature of the application.

In a typical homogenizer a piston pump with a piston following a reciprocating motion in a cylinder is used for pressurization purposes. In an intake stroke an inlet valve is opened and product enters the cylinder as the piston travels down to its bottom-dead-center. Following that the compression stroke commences and at a certain point an outlet valve is opened thus forming the slit through which the product is forced. The outlet valve comprises an annular valve seat and an actuated forcer (i.e. the valve). The valve seat and the valve are designed to withstand both the high pressures and the abrasive forces generated. Though the present invention in an embodiment related to homogenizers should not be limited to the stated parameters, typical homogenization pressures may reside in the range of 100-250 bar, and the annular gap forming the slit between the valve seat and the forcer has a width in the order of 0.1 mm.

Piston pumps having contact with foodstuff, which may be the case for the applications of the present invention, need to have a proven performance in terms of hygiene. There may be a difficulty in separating the non-hygienic side of the piston pump, comprising a crankcase and a crankshaft connecting the piston to the crankcase, from the hygienic side, comprising the portions of the cylinder being in contact with the food stuff. By necessity the piston moves relative to the cylinder during operation of the device, and this introduces to challenges.

The first challenge is that there will be an annular gap between the cylinder and the piston, which by necessity needs to be addressed since it connects the non-hygienic side and the hygienic side. This may be accounted for by arranging piston seals. The piston seals are usually annular and arranged on the cylinder wall (as oppose to piston rings being arranged on the side of the piston. A common approach is to arrange two spaced apart piston seals which are cooled and lubricated with water or steam condensate. Regular lubricant, such as lubricating oil as used on some other piston pumps cannot be used for obvious reasons, yet for some applications foodgrade oil may be used. The water may be injected in a location between the seals. Prior art is e.g. disclosed-in WO2011/002376 by the present applicant, as well as in and references cited in relation to that application.

The second challenge is that surface portions along the extension of the cylinder (and/or portions of the piston) will during the pump cycle be located both on the non-hygienic side and on the hygienic side or in an area therebetween, thus introducing a risk of reinfection. This challenge has been solved by injecting superheated water or steam onto the relevant surface portions. One aspect of this will be disclosed in detail in the detailed description.

Piston pumps are used in other areas than homogenizers, as standalone components in a circuit, and though examples before and after will relate to homogenizers it should be apparent for the skilled person that the present invention will provide benefits for piston pumps as such. US 2004/258547 discloses a piston/cylinder assembly.

Consequently, the present invention aims at providing a solution that alleviates drawbacks in prior art by providing a new method and arrangement for piston pumps.

### SUMMARY

For the above purposes the present invention as defined by the appended claims provides a piston configured for reciprocating motion in a cylinder bore and for sealing contact with piston seals. The first end of the piston is arranged for contact with a product to be processed, and the second end is configured for coupling to a piston drive, driving the reciprocating motion of the piston. The piston is characterized in that at least a portion of the piston arranged for contact with the piston seals is coated with a low-friction material. Piston is particularly well adapted for use in piston pumps in general and piston pumps used for homogenizers in particular. The invention as such may be useful in other contexts as well. The clarification of the purposes of the different ends of the piston is merely explanatory and has been added to simplify understanding.

According to one or several embodiments, wherein the first end of the piston is coated with a low-friction material. In further embodiment the entire piston may be coated with a low-friction material.

In embodiments relating to processing of foodstuff it is preferred that the low-friction material is a food-grade material. Some low-friction materials that may be used are PTFE or DLC.

The piston described above and below may be used in piston pump, an example being a piston pump used in a homogenizer.

Adding to one beneficial effect of the piston coating the piston pump may comprise at least one piston pump seal arranged in an annular slot in the cylinder wall and extending into sealing contact with the piston, wherein a radially inner surface portion of the seal may be provided with a coating of a low-friction material. In still other embodiment the entire peripheral surface of the seal is coated with a low-friction material.

In one or more embodiments the cylinder of a piston pump comprising the inventive piston according to one embodiment thereof may comprise an inlet and an outlet for lubricating fluid or sterilizing fluid, such as water or other fluid in an annular slit between the cylinder wall and the piston.

According to a second concept the present invention relates to a seal comprising an annular seal body formed from an elast, configured to be arranged between a cylinder wall and a movable piston. The seal is characterized in that a radially inner surface portion of the seal is provided with a coating of a low-friction material. The seal is predominantly intended for a piston pump, yet other embodiments where there is a relative motion between components in a similar way may be contemplated.

In one or more embodiments the annular seal body comprises a protruding sealing lip formed in one piece with the annular seal body and extending in an axial direction from a radially inner portion of the annular seal body.

In still further embodiments the full peripheral surface of the seal is provided with the coating of a low-friction material.

For optimization purposes a thickness of the coating varies over the peripheral surface of the seal, in one or more embodiments of the present invention.

In one or several embodiments the coating is limited to a surface not including the sealing lip, such that the sealing lip may perform an unconstraint action towards the piston.

In some embodiments and with the purpose of adjusting to a varying abrasive wear and/or in order to avoid deformation of the seal a thickness of the coating decreases in a direction away from an axial end of the seal comprising a sealing lip. The thickness may also vary in other way.

### BRIEF DESCRIPTION OF THE DRAWINGS

Fig. 1A is a sectional view of a piston pump including a first embodiment of the present invention.
Fig. 1B is a section view of a piston, illustrating various embodiments of the present invention.
Fig. 2 is a sectional view and a plan view of a seal, which may be used in an embodiment of the present invention.
Fig. 3 illustrates schematically further embodiments of a seal of Fig. 2.

### DETAILED DESCRIPTION OF EMBODIMENTS

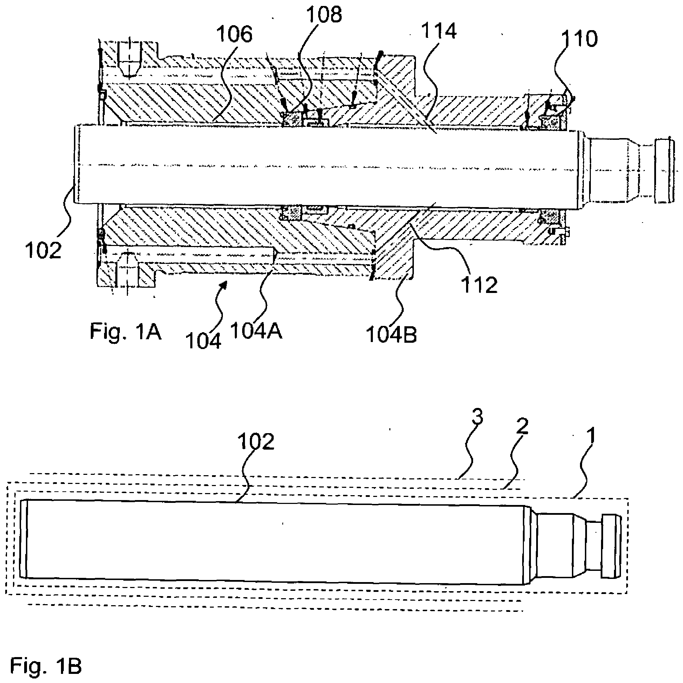

Fig. 1 illustrates a portion of a piston pump of a homogenizer comprising a first embodiment of the present invention. A piston 102 is arranged in a cylinder housing 104 comprising a cylinder bore 106 ("cylinder" in the following). The piston 102 is connected to a piston drive, an actuation mechanism (not shown) for providing a drive to the reciprocating motion of the piston 102. In the present embodiment a connection rod (not shown) connecting the piston 102 to a crank shaft (not shown) may preferably be used, yet other actuating mechanisms are not to be ruled out, such as hydraulic or pneumatic devices, cam mechanisms, or servomotors.

Two annular piston seals 108, 110 are arranged in annular slots in the peripheral wall of the cylinder 106, referred to as cylinder wall. Each piston seal 108, 110 extends into the cylinder 106 and sealingly contacts the pistons 102. A channel 112 opens up into the cylinder 106 at a position between the seals 108, 110. The channel 112 guides a sterilization and/or lubrication fluid (water, sterile water, hot sterile water or hot sterile water mixed with steam, ethanol or other sanitary fluid) to the region between the piston 102 and the cylinder wall. Another channel 114 leads the fluid away from the area. In other embodiments several such channels 112/114 may be arranged. It should also be mentioned that embodiments where only one piston seal is used may be relevant alternatives.

In a piston pump where the seals are arranged on the cylinder wall rather than on the piston itself, the word "rod" is sometimes used for the component referred to as "piston 102" in the present application.

In one or more embodiments the cylinder housing 104 may be formed from two parts 104A and 104B, which also is illustrated in Fig .1A.

In the present embodiment portions of the piston are coated with low-friction material. The portions may be selected from the group comprising: portions being in contact with piston seals during operation of the device, portions being in contact with product during operation of the device, and portions not being in contact with piston seals or product during operation of the device, or combinations thereof. Coating portions of the piston being in contact with the piston seals will result in a friction reducing effect. The benefits emanating from a lowered friction are listed by the end of the present specification. Coating the portions of piston being in contact with the product will reduce the tendency of product sticking to the piston, and thus simplify cleaning. Also, if e.g. proteins stick to the surface of the piston it may be scraped of by the seals, thus resulting in fouling of both the piston and the seal(s), this fouling may result in a deterioration of the sealing properties. Application of a coating will also ensure a predictable contact between the product and the piston. Further, during cleaning with chemicals the piston may be protected from the quite aggressive cleaning agents, which may be used to ensure proper cleaning. Coating the rest of the piston as well will provide a combined effect as well incurring a full protection for the piston in relation to friction, product, and other fluids. Other examples include that the top and lateral sides of the piston are coated with a low-friction material, i.e. the portions particularly exposed to friction, product, or other fluids. The piston may preferably be manufactured from stainless steel, food grade, yet embodiments where the piston is fully coated enables use of other materials. Therefore aluminium or steel of other quality, etc. are also possible alternatives.

Fig. 1B is a schematic drawing illustrates some options for the extension of the coating. In 1 the entire piston is coated, in 2 the portions mainly exposed to frictional wear (the sides of the piston on its cylindrical portion) and the top of the piston have been coated, and finally, in 3 only the sides have been coated.

As for the seal, which described in the following, the coating of the piston may be one and the same material, yet it may also be a combination of materials. One example would be that portions of the piston exposed to less abrasive wear are provided with a corrosion-resistant coating only, while the remaining portions of the piston are provided with low-friction material. An example would be having the entire piston is coated with coating preventing corrosion (the area 1 in Fig. 1 B) while only the sides (area 3 in Fig. 1 B) are coated with a low-friction material.

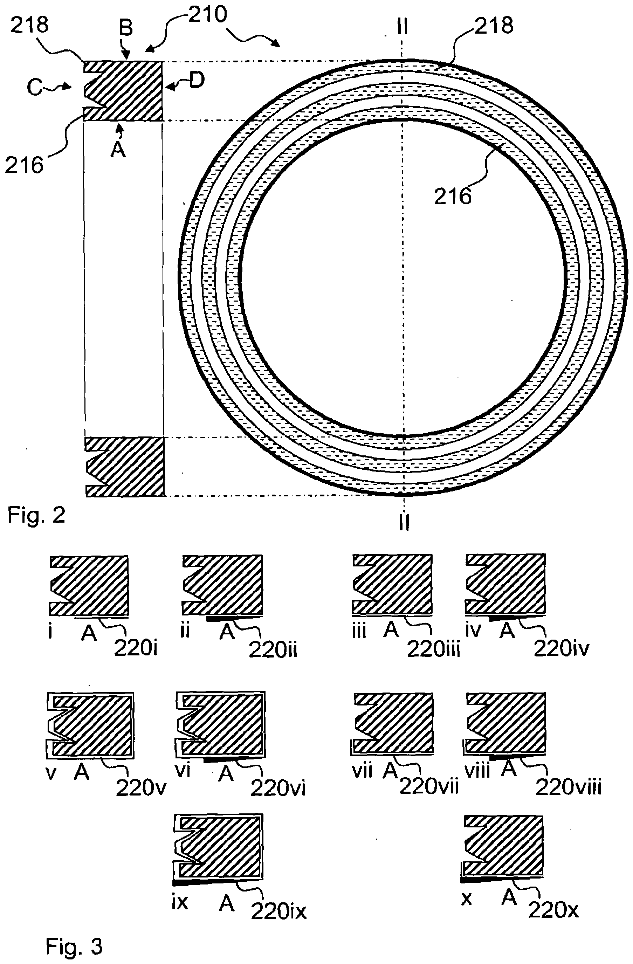

A typical piston pump seal 210 is illustrated in Fig. 2, in a plan view (to the right) and a cross sectional view (to the left), and its arrangement in a piston pump is clarified e.g. in Fig. 1 from the seals 108 and 110 respectively. The seal 210 could represent any one of the seals 108 or 110, or a different seal not shown in the arrangement of Fig. 1A. The side facing the piston, the radially inner side is denoted A in Fig. 2, while B denotes the side facing the cylinder, the radially outer side. C refers to the side facing the product, while D denotes the side facing away from the product. In use a thin film of lubricant will be generated between the side B and the piston to form a hydraulic seal. The lubricant may consist of water or product in the embodiments illustrated in the present application, yet a food-grade lubricant may also be used. In the cross section of Fig. 2 it is worth pointing out the sealing lip 216 extending from the side C. The seal 210 is a symmetric annular construction, and the sealing lip 216 extends around the inner perimeter of the seal. In operation the pressure difference between the product side and the other side will push the sealing lip towards the piston, thus providing a proper seal. A similar sealing lip 218 may be arranged on the radially outer perimeter for the seal, so as to seal towards the cylinder wall. The cross sectional shape of the seal may vary beyond what is shown in Fig. 2, yet the use of sealing lip 216 or similar functional component is likely to be included in preferred embodiments.

The seal 210 is formed from a base or core material, an elast, fully or partially coated by a low-friction material. Typical examples could include, but is not limited to: nitrile rubber, EPDM (ethylene propylene diene monomer) rubber, PU (polyurethane), fluoroelastomers, etc. The core may also be reinforced by woven or non-woven fibers, e.g. a cord of Nomex® or Kevlar® or other fibre-material.

For the purposes of a first aspect of the present invention it may suffice that only the portions of the seal being in sealing contact with the piston is coated, i.e. the portions being exposed to frictional movement. This arrangement will have the advantage that the frictional wear as well as frictional heat generation is reduced. Yet another advantage is that the resilient or elastic properties of a base material onto which the coating is applied will be preserved, and may be utilized to the benefit of the application, e.g. by providing a good seal.

It may be argued that the use of the term "low-friction material" is not clear. Within the context of the present application the term refers to a material which when applied as a coating to a first material it provides a lower (even significantly lower) friction than the first material. The coating with low-friction material provides a lowered coefficient of friction for the components on which it is arranged. Moreover, the word "low-friction material" is not merely a relative term, it is also explanatory for the skilled person in the same way as e.g. "lubricant".

In another embodiment the entire surface of the seal is coated with a low-friction material. Apart from the advantages above, this solution has an advantage in that a core material of the piston seal will never be in contact with any foodstuff. The core material may therefore not necessarily have to be approved for food contact and the sealing properties of the material may then be prioritized when selecting the material for the seal, to the benefit of the performance of the homogenizer in which it is arranged. It may sound contradictory that the fully coated core would affect the sealing properties, yet as an example a comparably soft material with good resilience may provide excellent sealing properties when coated with the low-friction material, while without coating it may not be so good, and as another example: a material with excellent sealing properties but which is sensitive for contact with the fluids present during processing may be fully coated and used.

In still other embodiments the coating is applied in a non-homogenous layer. This approach may be applied for the partly coated embodiment as well as for the fully coated layer. One embodiment would comprise having a thicker coating on the portions of the seal being subjected to abrasive wear, and a thinner coating on other portions in order to maintain the properties of the base material while still protecting base material from being contacted by fluids present in the piston pump. Typical fluids include but are not limited to, lie, cleaning agents, product, steam, water.

A variation of the latter embodiment includes having an axially varying thickness of the coating on the radially inner side of the seal. The reason for this may be that the pressure with which the seal is pressed towards the piston may vary with axial position, and this may be accounted for by varying the thickness of the coating. In the present context axial is the direction orthogonal to the radial direction, i.e. the direction of movement of the piston.

The above embodiments are schematically illustrated in the partial cross sectional views of Fig. 3i-3x, where the reference numeral 220 indicates a representation of the coating in terms of extension and thickness. It should be emphasized that the illustrations are mere schematic indications for facilitating understanding of the invention as exemplified in a few embodiments thereof.

For the above and further embodiments it may be beneficial that the seal is formed in one piece. Further, it may be beneficial that it lacks hidden crevices or undercut voids in order to avoid accumulation of product or other fluids during operation.

Embodiments where the piston is fully or partially coated may be combined with embodiments where the seal is fully or partially coated, and vice versa, yet these two classes of embodiments may also be used in isolation.

The use of a low-friction material for coating the piston seals and/or the piston may result in one or several advantages. The reduction of friction results in less generation of heat, and since heat is a major contributor to degradation of the seals, and the friction will affect the durability of the piston, the measures in isolation or in combination will add to the uptime of the piston pump and of a machine in which it is arranged. A longer uptime will add to the efficiency of the machine. In food-processing downtime is often if not always associated with a cleaning or sterilization of the machine. Cleaning a machine is time consuming and also consumes resources such as cleaning agents, water and energy. Since the time translates into a loss in productivity, the avoidance of downtime can be very rewarding.

In a further aspect of the invention it relates to a seal for ensuring dynamic seal between moving parts, wherein the seal has the constructional features of the seal described in reference to the piston pump seal.

An example of a potential coating material is PTFE (polytetrafluoroethylene). PTFE is what is known as GRAS material - Generally Recognized As Safe (under *the Federal* Food, *Drug, and Cosmetic Act,* U.S. Food and drug administration), and is allowed to come in contact with foodstuff. Another example could be diamond-like carbon, yet other low-friction material could be used as well, which may preferably be a food-grade material in applications where that may be an issue. "Coating" is used in the context coating in a permanent, non-removable manner, as oppose to applying a layer of lubricant onto the seal and/or piston. The coating may be worn of by abrasive wear over time, still it is considered to correspond to a permanent coating.

In the claims reference is made to a first and second low-friction material, respectively. This is made only to emphasize that for a specific embodiment the low-friction material does not have to be the same, though it could of course be. In that sense the first and second low-friction material may be selected from the same group of materials, as previously described referring to "low-friction material" or "coating".

## Claims

1. A piston arrangement comprising a piston and a cylinder, said piston being configured for reciprocating motion in a cylinder bore and for sealing contact with piston seals, wherein a first end of the piston is arranged for contact with a product to be processed and the second end is configured for coupling to a drive means, wherein at least a portion of the piston arranged for contact with the piston seals is coated with a first low-friction material, providing a lowered friction as compared to the uncoated piston, the piston further comprising at least one piston pump seal arranged in an annular slot in the cylinder wall and extending into sealing contact with the piston, wherein a radially inner surface portion of the seal is provided with a coating of a second low-friction material, and **characterized in that**
the cylinder comprises an inlet and an outlet for lubricating or sterilizing fluid water or other fluid in an annular slit between the cylinder wall and the piston.

2. The piston arrangement of claim 1, wherein the first end of the piston is coated with the first low-friction material.

3. The piston arrangement of any preceding claim, wherein the entire piston is coated with the first low-friction material.

4. The piston arrangement of any preceding claim, wherein the first and/or second low-friction material is a food-grade material.

5. The piston arrangement of any preceding claim, wherein the first and or second low-friction material is PTFE or DLC.

6. The piston arrangement of any preceding claim, wherein the piston seal comprises an annular seal body formed from an elast, configured to be arranged between a cylinder wall and a movable piston, wherein a radially inner surface portion of the seal is provided with a coating of the second low-friction material, said second low-friction material providing a lowered friction as compared to the elast.

7. The piston arrangement of claim 6 wherein the annular seal body comprises a protruding sealing lip formed in one piece with the annular seal body and extending in an axial direction from a radially inner portion of the annular seal body.

8. The piston arrangement of claim 6 or 7, wherein the full peripheral surface of the seal is provided with the coating of a low-friction material.

9. The piston arrangement of any one of claims 6-8, wherein a thickness of the coating varies over the peripheral surface of the seal.

10. The piston arrangement of claim 6 or 7, wherein the coating is limited to a surface not including the sealing lip.

11. The piston arrangement of any preceding claim, wherein a thickness of the coating decreases in a direction away from an axial end of the seal comprising a sealing lip.

12. A piston pump comprising the piston arrangement of any preceding claim arranged for reciprocating movement in a cylinder bore.

13. A homogenizer comprising a piston pump of claim 12.

14. Use of a piston arrangement according to any one of claims 1-11 in a homogenizer.

## Patentansprüche

1. Kolbenanordnung, umfassend einen Kolben und einen Zylinder, wobei der Kolben für Pendelbewegung in einer Zylinderbohrung und für dichtenden Kontakt mit Kolbendichtungen ausgelegt ist, wobei ein erstes Ende des Kolbens für Kontakt mit einem zu verarbeitenden Produkt angeordnet ist und das zweite Ende zum Koppeln an ein Antriebsmittel ausgelegt ist, wobei mindestens ein Teil des Kolbens, der zum Kontakt mit den Kolbendichtungen angeordnet ist, mit einem ersten reibungsarmen Material beschichtet ist, das verglichen mit dem unbeschichteten Kolben eine verringerte Reibung bereitstellt, wobei der Kolben ferner mindestens eine Kolbenpumpendichtung umfasst, die in einem ringförmigen Schlitz in der Zylinderwand angeordnet ist und sich in dichtenden Kontakt mit dem Kolben erstreckt, wobei eine Beschichtung aus einem zweiten reibungsarmen Material auf einem radial inneren Oberflächenteil der Dichtung bereitgestellt wird, und **dadurch gekennzeichnet, dass**
der Zylinder einen Einlass und einen Auslass für schmierendes oder sterilisierendes fließfähiges Wasser oder anderes Fluid in einem ringförmigen Schlitz zwischen der Zylinderwand und dem Kolben umfasst.

2. Kolbenanordnung nach Anspruch 1, wobei das erste Ende des Kolbens mit dem ersten reibungsarmen Material beschichtet ist.

3. Kolbenanordnung nach einem der vorhergehenden Ansprüche, wobei der gesamte Kolben mit dem ersten reibungsarmen Material beschichtet ist.

4. Kolbenanordnung nach einem der vorhergehenden Ansprüche, wobei das erste und/oder zweite reibungsarme Material ein Material von Lebensmittelqualität ist.

5. Kolbenanordnung nach einem der vorhergehenden Ansprüche, wobei das erste und/oder zweite reibungsarme Material PTFE oder DLC ist.

6. Kolbenanordnung nach einem der vorhergehenden Ansprüche, wobei die Kolbendichtung einen ringförmigen Dichtungskörper umfasst, der aus einem elastischen Material gebildet ist, das ausgelegt ist, um zwischen einer Zylinderwand und einem beweglichen Kolben angeordnet zu werden, wobei eine Beschichtung des zweiten reibungsarmen Materials auf einem radial inneren Oberflächenteil der Dichtung bereitgestellt wird, wobei das zweite reibungsarme Material verglichen mit dem elastischen Material eine herabgesetzte Reibung bereitstellt.

7. Kolbenanordnung nach Anspruch 6, wobei der ringförmige Dichtungskörper eine herausragende Dichtungslippe umfasst, die einteilig mit dem ringförmigen Dichtungskörper gebildet ist und sich von einem radial inneren Teil des ringförmigen Dichtungskörpers in eine axiale Richtung erstreckt.

8. Kolbenanordnung nach Anspruch 6 oder 7, wobei auf der vollständigen Umfangsoberfläche der Dichtung die Beschichtung aus einem reibungsarmen Material bereitgestellt wird.

9. Kolbenanordnung nach einem der Ansprüche 6 bis 8, wobei eine Dicke der Beschichtung über die Umfangsoberfläche der Dichtung variiert.

10. Kolbenanordnung nach Anspruch 6 oder 7, wobei die Beschichtung auf eine Oberfläche begrenzt ist, die die Dichtungslippe nicht einschließt.

11. Kolbenanordnung nach einem der vorhergehenden Ansprüche, wobei eine Dicke der Beschichtung in einer Richtung abnimmt, die von einem axialen Ende der Dichtung, die eine Dichtungslippe umfasst, wegführt.

12. Kolbenpumpe, umfassend die Kolbenanordnung nach einem der vorhergehenden Ansprüche, die für eine Pendelbewegung in einer Zylinderbohrung angeordnet ist.

13. Homogenisierer, umfassend eine Kolbenpumpe nach Anspruch 12.

14. Verwendung einer Kolbenanordnung nach einem der Ansprüche 1 bis 11 in einem Homogenisierer.

## Revendications

1. Agencement de piston comprenant un piston et un cylindre, ledit piston étant configuré pour un mouvement alternatif dans un alésage de cylindre et pour un contact d'étanchéité avec des joints de piston, dans lequel une première extrémité du piston est agencée pour un contact avec un produit à traiter et la deuxième extrémité est configurée pour s'accoupler à un moyen d'entraînement, dans lequel au moins une partie du piston agencé pour un contact avec les joints de piston est revêtue d'une première matière à coefficient de frottement réduit, assurant un frottement diminué par rapport au piston non revêtu, le piston comprenant en outre au moins un joint de pompe à piston disposé dans une fente annulaire dans la paroi du cylindre et s'étendant en contact d'étanchéité avec le piston, dans lequel une partie de surface radialement intérieure du joint est pourvue d'un revêtement d'une seconde matière à coefficient de frottement réduit, et
**caractérisé en ce que** le cylindre comprend une entrée et une sortie pour lubrifier ou stériliser l'eau ou un autre fluide dans une fente annulaire entre la paroi du cylindre et le piston.

2. Agencement de piston selon la revendication 1, dans lequel la première extrémité du piston est revêtue avec la première matière à coefficient de frottement réduit.

3. Agencement de piston selon l'une quelconque des revendications précédentes, dans lequel le piston tout entier est revêtu avec la première matière à coefficient de frottement réduit.

4. Agencement de piston selon l'une quelconque des revendications précédentes, dans lequel la première et/ou la seconde matière à coefficient de frottement réduit sont une matière de qualité alimentaire.

5. Agencement de piston selon l'une quelconque des revendications précédentes, dans lequel la première et/ou la seconde matière à coefficient de frottement réduit sont du PTFE ou du CDA.

6. Agencement de piston selon l'une quelconque des revendications précédentes, dans lequel le joint de piston comprend un corps de joint annulaire constitué d'un élast, configuré pour être disposé entre une paroi de cylindre et un piston mobile, dans lequel une partie de surface radialement intérieure du joint est pourvue d'un revêtement de la seconde matière à coefficient de frottement réduit, ladite seconde matière à coefficient de frottement réduit assurant un frottement diminué par comparaison avec l'élast.

7. Agencement de piston selon la revendication 6, dans lequel le corps de joint annulaire comprend une lèvre d'étanchéité saillante formée d'une seule pièce avec le corps de joint annulaire et s'étendant dans une direction axiale depuis une partie radialement intérieure du corps de joint annulaire.

8. Agencement de piston selon la revendication 6 ou 7, dans lequel dans lequel la surface périphérique du joint toute entière est pourvue du revêtement d'une matière à coefficient de frottement réduit.

9. Agencement de piston selon l'une quelconque des revendications 6 à 8, dans lequel l'épaisseur du revêtement varie sur la surface périphérique du joint.

10. Agencement de piston selon la revendication 6 ou 7, dans lequel le revêtement est limité à une surface ne comprenant pas la lèvre d'étanchéité.

11. Agencement de piston selon l'une quelconque des revendications précédentes, dans lequel l'épaisseur du revêtement diminue dans une direction s'éloignant de l'extrémité axiale du joint comprenant une lèvre d'étanchéité.

12. Pompe à piston comprenant l'agencement de piston selon l'une quelconque des revendications précédentes agencé pour un mouvement alternatif dans un alésage de cylindre.

13. Homogénéisateur comprenant une pompe à piston selon la revendication 12.

14. Utilisation d'un agencement de piston selon l'une quelconque des revendications 1 à 11 dans un homogénéisateur.
